# EUROPEAN PATENT SPECIFICATION

(11) **EP 1 047 623 B1**
(45) Date of publication and mention of the grant of the patent: **13.11.2002**
(21) Application number: 96925503.3
(22) Date of filing: 24.07.1996
(51) Int. Cl.: B67B 7/46, B67B 7/02, B67B 7/18

(54) **VIAL CLOSURE REMOVER**
PHIOLEVERSCHLUSSHEBER
DISPOSITIF POUR ENLEVER LES ELEMENTS DE FERMETURE DE FLACONS

(30) Priority: 24.07.1995 US 1379
(43) Date of publication of application: 02.11.2000
(73) Proprietor: SMITHKLINE BEECHAM CORPORATION, King of Prussia, PA 19406-0939 (US)
(72) Inventor: GLUSKIN, Richard, Devon, PA 19333 (US); POLI, Joseph, Denver, PA 19333 (US); CONSTABLE, Kevin, N., Clayton, DE 19703 (US)
(74) Representative: Viering, Hans-Martin, Dipl.-Ing.
(86) International application number: US9612259
(87) International publication number: WO97003915

(56) References cited:
- GB-A- 946 153
- GB-A- 1 245 081
- US-A- 4 530 202

## Description

### Field of the Invention

This invention relates to an apparatus for removing a closure from a container, such as the apparatus disclosed in US 4530202A, according to the preamble of the claim.

### Background of the Invention

Blood sample tubes and the like for handling liquid specimens usually have two types of closures, one being a soft rubber stopper-like device working on friction and the other being a screw cap-type closure. Automated sample handling requires some form of automated cap removing device which can handle these two types of quite different capping means.

Closures in the form of soft rubber stoppers comprise a closure wall across the mouth opening of the vial and a plug depending therefrom which is inserted into the mouth opening of the vial or tube. Although this allows the closure to be easily inserted to form a fluid tight friction-compression seal, the softness of the rubber causes a problem for mechanical equipment intended for the removal of such closures. The compressibly deformable nature of such a rubber stopper causes them to deform when they are gripped by such equipment, for example by closure gripping jaws, and are therefore difficult to grip. A further problem is caused by the fact that some such vials may be closed by screw cap closures, and that as a consequence separate closure removal equipment will be necessary for rubber stoppered vials and screw cap vials.

It is an object of the present invention to provide a solution to this problem. Other objects and advantages of the present invention will become apparent from the following description.

### Summary of the Invention

This invention provides an apparatus for removing a closure from a container wherein the closure includes a closure wall across an opening of the container the apparatus comprising:
a container grip means for gripping the container and subsequently releasing the container when the closure has been removed,
closure grip means which include jaws which can grip the closure and remove a gripped closure from the gripped container during a relative separation movement of the jaws and container,
the container grip means and closure grip means being moveable into a position relative to each other such that the closure of a container gripped by the container grip means can be gripped and removed by the said jaws,
wherein the apparatus includes a rigid member which is moveable into a position between the jaws and into contact with the closure wall, characterized in that the rigid member is included in the closure gripping means so that the contact of the said rigid member with the closure when the closure is a compressibly deformable closure confers rigidity on said compressibly deformable closure to facilitate the gripping of the closure by the jaws and the removal of the closure by the jaws.

### Brief Description of the Drawings

The invention will now be described by way of example only with reference to the accompanying drawings.

Fig. 1 shows a cross section through a vial closure and adjacent part of a vial.

Fig. 2 shows a schematic plan view of a container gripping means, suitable for the vial of Fig. 1

Fig. 3 shows a schematic side view of closure gripping means suitable for the closure of Fig. 1, with jaws open.

Fig. 4 shows a schematic underside view of the closure gripping means of Fig. 3.

### Description of the Invention

The containers may be the above mentioned clinical specimen vials, being typically glass or plastics material tubes of typically ca. 10 ml capacity and 15mm diameter. The closures for such vials may be the above mentioned soft rubber stoppers or screw caps. A particular type of soft rubber stopper for such vials has a dimple in the upper out-facing surface of its closure wall, ca. 8mm in diameter and 3mm deep. Such vials are available commercially, such as the "Vacutainer™" marketed by Becton Dickinson. A particular advantage of the apparatus of this invention is that it can remove both such rubber stoppers and screw caps without any prior need to distinguish between rubber stoppered and screw capped vials or to treat them separately.

The container grip means may conveniently comprise a set of closable jaws which can grip the container. Preferably the grip means aligns the container in a predetermined orientation, and accurately positions the container, so that the operation of the container and closure grip means may be automated and easily controlled by data processing equipment. In the case of the above mentioned tubular vials, such jaws preferably close in an opposing manner across the diameter of the tube, and the jaws may include a pair of opposing "V" shaped cut outs in the jaw surface facing the vial to ensure accurate alignment and positioning, and to allow the jaws to grip vials of various diameters.

In the case of the above mentioned tubular vials the closure grip jaws preferably also close in an opposing manner across the diameter of the closure, and may also include a pair of opposing "V" shaped cut outs in the jaw surface facing the closure. Such "V" shaped cut outs allow the jaws to grip closures of various diameters and also assist in achieving a firm grip around the closure.

The jaws of the container grip means and the closure grip jaws are preferably surfaced with a high friction resilient polymer material to facilitate a firm grip on respectively the container and the closure.

The relative separation movement of the jaws and closure is preferably a movement in which the jaws pull the closure away from the container. In the case of the above mentioned vials, this movement includes a pulling movement in the long axial direction of the vial, thereby pulling the closure away from the vial. If the closure is a screw cap closure, the relative separation movement must include a rotational unscrewing movement, optionally combined with a pulling action. If the closure is of the rubber stopper type retained in the vial by friction as described above, such a rotational movement is not detrimental to, and can assist, the removal of the closure. This type of relative separation movement thereby enables the apparatus of the invention to remove both rubber stopper and screw cap closures from vials.

The rigid member is preferably on an axis or the projection of an axis extending along the center line between the closure grip jaw surfaces. In a preferred embodiment of the closure grip means, suitable for vials, the closure grip jaws approach the closure from above during the above mentioned movement of the container grip means and closure grip means into a position relative to each other such that the closure of a container gripped by the container grip means can be gripped by the jaws.

The contact of the rigid member with the soft rubber stopper can prevent the soft rubber wall from deforming by buckling inward as the closure grip jaws close around the stopper by providing a rigid backstop. Suitable shapes and sizes for the part of the rigid member that contacts the closure can be determined by simple experimentation. However if the vial closure has a dimple as mentioned above in the upper out-facing surface of its closure wall, the shape of the part of the rigid member which contacts the closure may correspond to the shape of the dimple.
Advantageously in such a construction the dimple allows the member to descend below the level of the upper out-facing surface of the closure wall, so that as the jaws close sideways around the closure, the rubber of the closure is sandwiched and caught between the jaws and the rigid member, resulting in improved gripping of the closure. Such a rigid member is also found to be suitable for use with screw capped vials as it senses serves to position correctly the jaws around the rigid caps as well.

The above mentioned movements of various parts of the apparatus of this invention may be produced using conventional drive means such as electric motors, pneumatic or hydraulic actuators etc. as well known to those skilled in the art. These movements may be controlled by known conventional automatic control equipment, linked to conventional data processing equipment. This control equipment may include sensors to read information off labels on the containers, e.g. bar codes on the vials, and known equipment to move the container grip means and/or closure grip means into accurately known locations relative to each other or to other parts of the apparatus.

It is essential that the control equipment includes means to determine that the closure is in such a position and correctly aligned relative to the closure grip means that when the jaws are closed they will grip the closure, e.g. the above mentioned rubber stopper, without also gripping adjacent parts of the container, e.g the abovementioned vials. Suitable means will be apparent to those skilled in the art of automatic control equipment. For example the container grip means may have grip surfaces that orient the longitudinal axis of a container such as a vial along a defined axis, and the closure grip means can approach the closure along this axis.

The rigid member preferably ends in the vicinity of the jaw surfaces and can thereby act as a sensing probe to detect by contact or proximity of the rigid member with the upper outer surface of the closure wall that the jaw surfaces are in a position where when they close they will grip the closure, but not contact the container when gripping the closure in a manner and with a force sufficient to remove the closure. In a preferred embodiment of the invention the rigid member is additionally capable of sensing the presence of the surface of the cap and controlling the positioning of the jaws around the closure relative to the container. For example a container such as a vial may be gripped whilst in an upright position by the container grip means, and the closure grip means may descend vertically downwards upon the vial, and the contact that occurs between the rigid member and the closure can communicate to the control equipment that the closure is in a suitable positional relationship relative to the jaws. In such a construction the bottom end of the rigid member may be between the upper and lower ends of the jaws.

In the apparatus, the containers are the above mentioned vials containing clinical specimens and are presented to the apparatus of the invention on the conveyor belt of an automated testing system. The vials are preferably gripped by the container grip means whilst on the conveyor or on an accumulator region of or adjacent to the conveyor and moved by drive means under the direction of the automatic control equipment into a position relative to the closure grip means such that the closure of a vial gripped by the container grip means can be gripped and removed by the jaws of the closure grip means. The jaws of the closure grip means then descend upon the closure under the direction of the automatic control equipment. The rigid member descends together with the jaws until the rigid member contacts the closure. The jaws of the closure gripping means then grip the closure, and the closure gripping means then moves in a separation movement relative to the vial, in which the closure gripping means both rotates anti-clockwise relative to the tubular axis of, and in the tube axial direction away from, the vial. This movement removes the closure, whether a soft rubber stopper or a screw cap from the vial. The closure may then be discarded, e.g. by the closure grip means and the vial being moved further apart whilst the closure grip means continues to grip the closure, then the closure being released into a closure collection area. The container gripping means may then return vials without their closures to the conveyor or accumulator area.

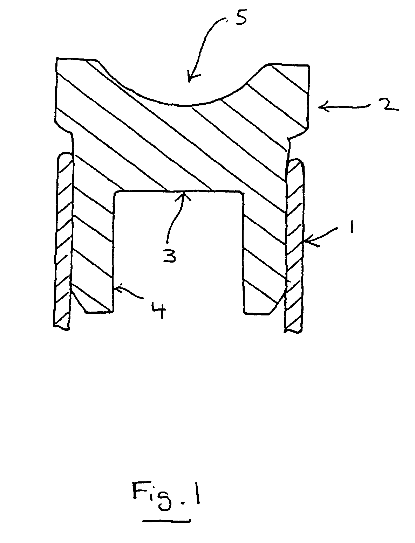

Referring to Fig. 1, the upper part of a conventional glass vial 1 for clinical specimens is shown, being a tube of ca.14mm internal diameter. Retained by a friction/compression fit in the vial 1 is a closure 2 (generally), being a soft rubber stopper having a closure wall 3 across the mouth opening of the vial 1. A plug 4 depends from the closure wall 3 and engages the vial 1. In the outer upper surface of the closure wall 3 is a dimple 5 of generally hemispherical shape.

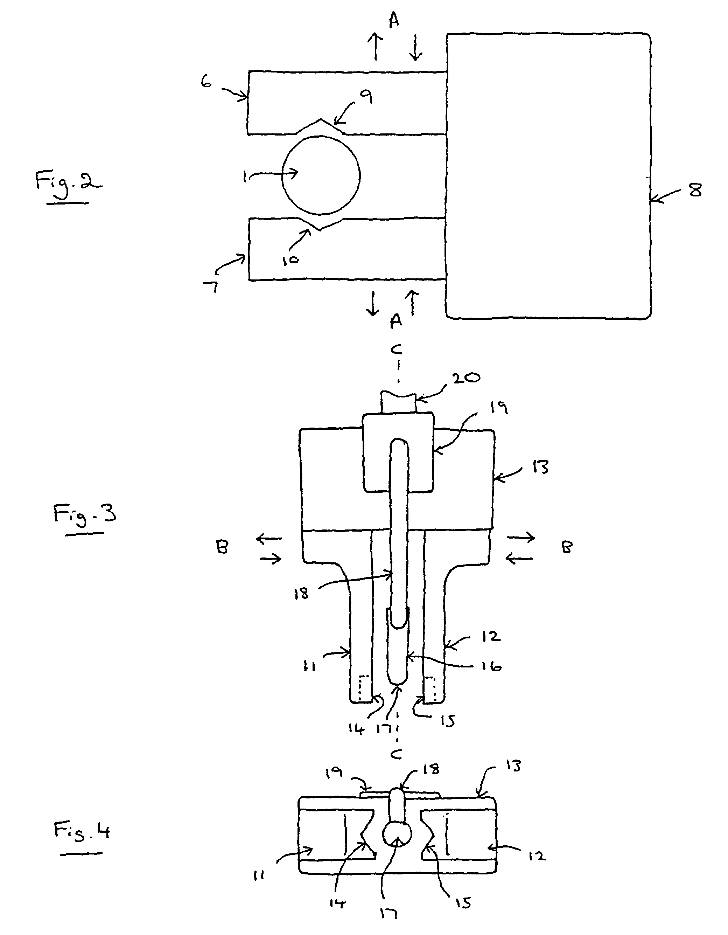

Referring to Fig. 2 a container gripping means comprises a pair of opposed jaws 6, 7. By means of compressed air operated actuators, (not shown) of conventional construction and operation, located in the drive means 8, the jaws 6, 7 can be moved reciprocally in the direction shown by the arrows A between open and closed positions around a vial 1. An intermediate position of the jaws 6, 7 between open and closed is shown in Fig. 2. The jaws 6, 7 have "V" shaped cut outs 9, 10 in the jaw surfaces, which enable firm and accurate positioning of the vial 1 in the jaws 6,7.

Referring to Figs. 4 and 5, a closure gripping means comprises a pair of opposed jaws 11, 12. By means of compressed air operated actuators, (not shown) of conventional construction and operation, located in the drive means 13, the jaws 11, 12 can be moved reciprocally in the direction shown by the arrows B between open and closed positions around a closure 2 (not shown in Figs. 4 and 5). The jaws 11, 12 have "V" shaped cut outs 14, 15 in the jaw surfaces, which enable firm and accurate positioning of the closure 2 in the jaws 11, 12.

Between the jaws 11, 12 and on the projection of an axis C-C extending along the centre line between the closure grip jaw surfaces 14, 15 is a rigid member 16, made of steel. The lower end 17 of the member 16 is just below the upper edge of the jaw surfaces 14, 15 and the lower end 17 is shaped to correspond to the dimple 5. The member 16 is connected by rigid connector 18 to a contact sensing device 19 of known type, mounted on the drive means 13.

In use, the container gripping means of Fig 2 is mounted adjacent to a conventional conveyor line (not shown) conveying vials 1 closed with closures 2 on an automated testing line, for example delivering the vials 1 to testing stations (not shown) where automated clinical tests are carried out. When there is a requirement to remove a closure 2 from a vial 1, the container gripping means, with the jaws 6, 7 open, is moved by conventional automatic movement means such as a robotic arm to a position in which the vial 1 is between the jaw surfaces 9, 10. It may be necessary to stop the vial 1 for this operation, or to move it to an accumulator area (not shown) adjacent to the conveyor. The jaws 6, 7 are then closed around the vial 1, such that the vial 1 is accurately positioned in the cut outs 9, 10. This operation may be responsive to information read automatically off a label on the vial 1, e.g. an optically readable bar code, instructing automatic control equipment (not shown) to operate the vial gripping means.

The vial gripping means, gripping the vial 1 is then moved by the said movement means into a position such that the axis of the tubular vial 1 is directly below the lower end 17 of rigid member 16. The closure gripping means of Figs. 3 and 4 is then moved downwards by drive means (not shown) which may be a conventional drive means such as a compressed air driven actuator. The lower end 17 of the member 16 contacts the closure 2, with the rounded lower end 17 fitting into the dimple 5. The contact detecting device 19 detects this contact, and causes the control equipment to instruct the drive means to cease the downward movement of the closure gripping means. Simultaneously or shortly thereafter the control equipment causes the jaws 11, 12 to close around the closure 2. As the end 17 of the rigid member 16 is within the dimple 5, the soft rubber material of the closure 2 is sandwiched between the jaw surfaces 14, 15 and the member 16. This enables the jaws 11, 12 to grip the closure 2 firmly without the deformation and buckling of the soft rubber material of the closure that would occur without the presence of the member 16.

With the closure 2 firmly gripped by the jaws 11, 12 the closure gripping means is moved by the drive means away from the vial 1 gripped in the jaws 6, 7, in a relative separation movement, in which the closure gripping means moves upwardly away from the vial gripping means in the direction of the axis C-C. At the same the closure gripping means is rotated by axle 20 about the axis C-C in an anti clockwise direction as seen looking down the axis C-C towards the closure 2. This removes the closure 2 from the vial 1. The closure 2 remains gripped by the closure gripping means, and the closure gripping means may be moved by the drive means into the vicinity of a closure disposal means (not shown) for example a disposal chute.

The vial 1 remains firmly gripped in jaws 6, 7, and the vial gripping means may after the removal of the closure be moved by the movement means into a position such that on opening the jaws 6, 7 the vial 1 is released and returned to the conveyor or to an accumulator area for subsequent transfer back onto the conveyor. The contents (not shown) of vials 1 without closures 2 may then be subjected to tests at testing stations for which absence of the closure 2 is necessary.

Although described in the specific description above for use with a soft rubber closure 2, the apparatus of the specific description is equally suitable for removal of a screw cap closure on the vial 1, although in this case such closures are normally made of a hard plastics material. In such a case the member 16 functions principally as a contact detection probe, communicating to the control equipment that the screw cap is in a position where it can be gripped by the closing of jaws 11, 12.

## Claims

1. An apparatus for removing a closure (2) from a container (1), wherein the closure includes a closure wall across an opening of the container, the apparatus comprising:
a container grip means (6,7) for gripping the container and subsequently releasing the container when the closure has been removed.
closure grip means which include jaws (11,12) which can grip the closure and remove a gripped closure from the gripped container during a relative separation movement of the jaws and container,
the container grip means and closure grip means being moveable into a position relative to each other such that the closure of a container gripped by the container grip means can be gripped and removed by the said jaws.
wherein the apparatus includes a rigid member (16) which is moveable into a position between the jaws and into contact with the closure wall, **characterized in that** the rigid member is included in the closure gripping means so that the contact of the said rigid member with the closure when the closure is a compressibly deformable closure confers rigidity on said compressibly deformable closure to facilitate the gripping of the closure by the jaws and the removal of the closure by the jaws.

## Patentansprüche

1. Vorrichtung zum Entfernen eines Verschlusses (2) von einem Behälter (1), wobei der Verschluss eine Verschlusswandung quer zur Öffnung des Behälters aufweist, mit:
einem Behälter-Greifmittel (6, 7) zum Greifen des Behälters und zum darauffolgenden Loslassen des Behälters, wenn der Verschluss gehoben worden ist,
Verschluss-Greifmittel, die Backen (11, 12) aufweisen, die den Verschluss greifen können und die einen gegriffenen Verschluss vom gegriffenen Behälter während einer Trennungs-Relativbewegung der Backen und des Behälters entfernen können,
wobei das Behälter-Greifmittel und die Verschluss-Greifmittel in eine Stellung relativ zueinander derart bewegbar sind, dass der Verschluss eines vom Behälter-Greifmittel gegriffenen Behälters mittels der Backen gegriffen und gehoben werden kann,
wobei die Vorrichtung ein starres Teil (16) aufweist, das in eine Stellung zwischen den Backen und in Berührung mit der Behälterwandung bewegbar ist, **dadurch gekennzeichnet, dass** das starre Teil dem Behälter-Greifmittel zugehörig ist, so dass, wenn der Verschluss ein zusammendrückbarer, deformierbarer Verschluss ist, die Berührung des starren Teils mit dem Verschluss dem zusammendrückbaren, deformierbaren Verschluss Steifheit verleihet um das Greifen des Verschlusses durch die Backen und das Entfernen des Verschlusses durch die Backen zu erleichtern.

## Revendications

1. Dispositif pour retirer un élément de fermeture (2) d'un récipient (1), dans lequel l'élément de fermeture comprend une paroi de fermeture en travers d'une ouverture du récipient, le dispositif comprenant :
des moyens (6, 7) de saisie du récipient pour saisir le récipient et ensuite relâcher le récipient lorsque l'élément de fermeture a été retiré ;
des moyens de saisie d'élément de fermeture qui comprennent des mâchoires (11, 12) pouvant saisir l'élément de fermeture et retirer un élément de fermeture saisi du récipient saisi, au cours d'un mouvement relatif de séparation des mâchoires et du récipient,
les moyens de saisie du récipient et les moyens de saisie de l'élément de fermeture étant mobiles vers une position relative, de telle sorte que l'élément de fermeture d'un récipient saisi par les moyens de saisie du récipient puisse être saisi et retiré par lesdites mâchoires,
le dispositif comprenant un élément rigide (16) déplaçable vers une position située entre les mâchoires et en contact avec la paroi de fermeture, et étant **caractérisé en ce que** l'élément rigide est inclus dans les moyens de saisie de l'élément de fermeture, de telle sorte que le contact dudit élément rigide avec l'élément de fermeture, lorsque l'élément de fermeture est un élément de fermeture déformable en compression, confère de la rigidité audit élément de fermeture déformable en compression, de façon à faciliter la saisie de l'élément de fermeture par les mâchoires et le retrait de l'élément de fermeture par les mâchoires.
